## Europäisches Patentamt
## European Patent Office
## Office européen des brevets

(19)

(11) Veröffentlichungsnummer: **0 143 360**
**B1**

(12) # EUROPÄISCHE PATENTSCHRIFT

(45) Veröffentlichungstag der Patentschrift:
25.01.89

(21) Anmeldenummer: 84113188.1

(22) Anmeldetag: 02.11.84

(51) Int. Cl.⁴: **C 09 D 5/08,** C 09 D 3/72,
C 08 G 18/08, B 05 D 7/14

(54) **Beschichtungsmasse für Stahl und Eisen, deren Verwendung, und Verfahren zur Erzeugung eines Schutzüberzuges.**

(30) Priorität: 02.11.83 DE 3339682

(43) Veröffentlichungstag der Anmeldung:
05.06.85 Patentblatt 85/23

(45) Bekanntmachung des Hinweises auf die Patenterteilung:
25.01.89 Patentblatt 89/4

(84) Benannte Vertragsstaaten:
AT BE CH DE FR GB IT LI LU NL SE

(56) Entgegenhaltungen:
EP-A-0 078 172
EP-A-0 103 309
DE-A-1 519 057
DE-A-2 848 720
DE-B-1 143 634
GB-A-2 105 732
US-A-3 440 224

(73) Patentinhaber: Kleinert, Viktor, Bubenbergplatz 8,
CH- 3011 Bern (CH)

(72) Erfinder: Meyer, Rainer Leo, Sommerbergstrasse
28, D-7580 Bühl (DE)
Erfinder: John, Reimar, Zur Friedrichshöhe 37,
D-7590 Achern- II (DE)
Erfinder: Nagel, Rolf, Schartenbergstrasse 42c,
D-7570 Baden- Baden 23 (DE)
Erfinder: Müller, Günter, Rösselweg 6-7, D-7591
Obersasbach (DE)

(74) Vertreter: Vogeser, Werner, Dipl.- Ing.,
Patentanwälte Hansmann & Vogeser Albert-
Rosshaupter- Strasse 65, D-8000 München 70 (DE)

EP 0 143 360 B1

LIBER, STOCKHOLM 1989

## Beschreibung

Die Erfindung betrifft Beschichtungsmassen für Stahl und Eisen, die wegen ihres Gehaltes an Isocyanat-Präpolymer chemisch härtend sind. Insbesondere betrifft die Erfindung 1-Komponenten-Beschichtungsmassen dieser Art, die im fertig abgemischten Zustand bei Feuchtigkeitsausschluß lagerbeständig sind, jedoch nach Aufbringen auf dem vorgesehenen Stahl- oder Eisenuntergrund durch Feuchtigkeits-Zutritt aus der umgebenden Atmosphäre aushärten. Weiterhin betrifft die Erfindung ein Verfahren zur Erzeugung eines Schutzüberzuges mit derartigen Beschichtungsmassen auf einem Stahl- oder Eisenuntergrund. Schließlich betrifft die Erfindung verschiedene Verwendungen dieser feuchtigkeitshärtenden 1-Komponenten-Beschichtungsmassen.

Es sind bereits 1-Komponenten-Beschichtungsmassen bekannt, die wegen ihres Gehaltes an Polyisocyanat nach Feuchtigkeitszutritt chemisch aushärten. Solche Systeme können auch unlösliche, anorganische Pigmente insbesondere Eisen(III)Oxid-Pigmente enthalten. Zu den letzteren gehören die aus der DE-A-2 848 720, der GB-A-2 105 732 und der EP-A-0 103 309 bekannten Beschichtungs- oder Anstrichmassen.

Aus der DE-OS-1 519 057 ist ein Verfahren zum Pigmentieren von Polyurethan-Präpolymeren bekannt. Das Verfahren soll auch zur Erzeugung von 1-Komponenten-Beschichtungsmassen geeignet sein, die als Pigment beispielsweise Eisenoxydrot, Eisenoxydgelb oder Eisenoxydschwarz (316 F der Fa. BAYER AG) enthalten. Zusätzlich zu Polyurethan-Präpolymer und einem Eisenoxyd-Pigment kann die Beschichtungsmasse weitere Bestandteile enthalten, wie etwa Lacklösungsmittel (beispielsweise Methylglykolazetat oder Methylisobutylketon) und ein feuchtigkeitsbindendes Mittel, wie etwa Alkylborate, Alkyltitanate, Furfuryläther, Äthylorthoformiat, Äthylorthosilikat oder Glykoldiformiat.

Konkrete Angaben zur quantitativen Zusammensetzung von gebrauchsfertigen, Eisen(III)oxid-Pigment enthaltenden 1-Komponenten-Beschichtungsmassen fehlen. Für eine beispielhafte Beschichtungsmasse wird ein Gehalt von 8 Gew.-% Präpolymer und 23 Gew.-% Pigment, nämlich Bariumsulfat angegeben; eine andere beispielhafte Beschichtungsmasse enthält 76 Gew.-% Präpolymer und 1,3 Gew.-% Pigment, nämlich Ruß mit großer Oberfläche. Über die Anwendung dieser bekannten Beschichtungsmassen auf bestimmten Substraten ist nichts gesagt.

Weiterhin sind Eisenoxid-Anstrichfarben als Rostschutzmittel für Stahl- und Eisenflächen bekannt geworden. Häufig handelt es sich hierbei um einfache Anstrichmittel mit Eisenoxid in einem leicht verdunstbaren Lösungsmittelgemisch. Im erhaltenen Anstrich weist das Eisenoxid nur eine geringe Haftung zum Untergrund auf. Soweit nach anderen Vorschlägen solche Eisenoxid-Anstrichfarben auch organische Bindemittel enthalten, handelt es sich hierbei nicht um Polyurethan-bildende Systeme.

Schließlich sind in jüngerer Zeit speziell zum Korrosionsschutz von Stahl- und Eisenflächen 1-komponentige Epoxidharzester-Systeme und 2-komponentige Epoxidharz-Systeme vorgeschlagen worden. Ein Teil dieser bekannten Anstrichmittel muß bei erhöhter Temperatur getrocknet und ausgehärtet werden, was mit nicht unerheblichen Energiekosten verbunden ist. Die erhaltenen Anstrichfilme weisen oftmals eine ungenügende Haftung am Untergrund auf, gewährleisten nur einen geringen Widerstand gegen mechanische Beschädigungen und bieten häufig nur einen geringen Korrosionsschutz, insbesondere gegenüber sauren Einflüssen. Häufig erweist sich auch das Applizieren einer infolge Alterung und/oder Bewitterung erforderlichen Folgebeschichtung als problematisch und erfordert zumeist die Entfernung des noch vorhandenen Anstriches; dies gilt insbesondere auch für die 2-komponentigen Epoxidharz-Systeme, die vorher durch Strahlung entfernt werden müssen, weil auf dem einmal ausgehärteten Film nach Alterung ein neuer zusätzlicher Film der gleichen Zusammensetzung nicht ausreichend haftet.

Davon ausgehend besteht die Aufgabe der vorliegenden Erfindung darin, eine bei Feuchtigkeitszutritt aushärtende 1-Komponenten-Beschichtungsmasse für Stahl- und Eisenflächen bereitzustellen, welche einen gut haftenden, gegen mechanische Beschädigung widerstandsfähigen und vor Korrosion, insbesondere auch gegenüber sauren und stark sauren Einflüssen schützenden Anstrichfilm ergibt.

Ein weiteres Ziel der vorliegenden Erfindung besteht darin, für eine an sich bekannte, feuchtigkeitshärtende 1-Komponenten-Beschichtungsmasse auf der Basis von Isocyanat-Präpolymer mit einem Gehalt an Eisen(III)oxid-Pigment, Lacklösungsmittel und feuchtigkeitsbindendem Mittel eine optimale Zusammensetzung anzugeben, um einen auch in erheblicher Schichtstärke von 50 μm und mehr applizierbaren Anstrichfilm zu erzeugen, der hervorragenden Korrosionsschutz auch gegenüber stark sauren Einwirkungen gewährleistet.

Die erfindungsgemäße Lösung dieser Aufgaben und Ziele ist eine Beschichtungsmasse der in Anspruch 1 angegebenen Zusammensetzung.

Grundlage der Erfindung ist die überraschende Beobachtung, daß ein Gehalt von 5 bis 15 Gew.-% Eisen(III)oxid, das mittels ausgewählter aliphatischer Ester stabilisiert ist, in einem feuchtigkeitshärtenden 1-Komponenten-System auf der Basis von Polyurethan bildendem Polyisocyanat eine Beschichtungsmasse ergibt, sie sowohl auf frischen, sandgestrahlten, wie auf mit handelsüblichen Rotprimern vorgeprimerten Flächen ausgezeichnet haftet und wegen der Applizierbarkeit in hohen Schichtdicken einen mechanisch widerstandsfähigen Anstrichfilm liefert, der ausgezeichnete Korrosionsbeständigkeit, insbesondere auch gegenüber sauren und stark sauren Einflüssen gewährleistet.

Bis herab zu pH-Werten von 2 ist der aus der erfindungsgemäßen Beschichtungsmasse enthaltene Schutzanstrich beständig. Wegen seiner hohen Chemikalienbeständigkeit kann die erfindungsgemäße Beschichtungsmasse hervorragend zum Korrosionsschutz im chemischen Apparatebau eingesetzt werden. Beispielsweise kann die erfindungsgemäße Beschichtungsmasse überall dort eingesetzt werden, wo herkömmliche, Zinkpulver enthaltende Anstriche nicht mehr einsetzbar sind, weil das Zink ab pH 6 in Lösung gehen würde.

Weil die erfindungsgemäße Beschichtungsmasse als 1-Komponenten-System konfektioniert ist, kann sie praktisch unter Feuchtigkeitsausschluß unbegrenzt gelagert werden, und härtet dennoch nach Aufbringung auf dem vorgesehenen Stahl- oder Eisenuntergrund durch Zutritt von Luftfeuchtigkeit aus der umgebenden Atmosphäre bei einer Schicht-Stärke von beispielsweise 20 bis 50 µm innerhalb von etwa 10 bis 30 min aus, so daß bereits nach 30 min bei Bedarf eine oder mehrere weitere Schicht(en) aufgebracht werden können. Nach ca. 15 bis 20 h ist der gesamte, gegebenenfalls mehrschichtige Schutzüberzug völlig ausgehärtet und kann der vorgesehenen Belastung ausgesetzt werden. Die erfindungsgemäße Beschichtungsmasse eignet sich in hervorragender Weise zur Erzeugung von Schutzüberzügen auf Stahl- und Eisenflächen. Die Bezeichnung "Stahl- und Eisenflächen" soll alle herkömmlichen Eisen-Werkstoffe einschließen, die neben den bekannten Legierungsmitteln einschließlich Kohlenstoff hauptsächlich aus Eisen bestehen. Beispielsweise dient die erfindungsgemäße Beschichtungsmasse zum Beschichten von Blechen aller Art, um Rostbildung, einschließlich Weißrostbildung zu verhindern, zur Erzeugung von Schutzüberzügen auf Rohren, die im Erdreich verlegt werden sollen, zum Korrosionsschutz von Stahlkonstruktionen aller Art, wie etwa Brücken, Industriebauten und Gefäßen und Rohrleitungen im chemischen Apparatebau, ferner als Anstrichmittel für Schiffe und Stahlkonstruktionen im Off-Shore-Bereich.

Die erfindungsgemäße Beschichtungsmasse kann als Haftgrundmittel auf frische Stahl- und Eisenflächen aufgebracht werden, beispielsweise auf frisch gewalztem und entfetteten Weiß-Blech oder nach dem Sandstrahlen. In diesem Falle ersetzt die erfindungsgemäße Beschichtungsmasse die bekannten "Primer" und gewährleistet einen besser haftenden Anstrichfilm. In diesem Falle wird die Beschichtungsmasse in relativ geringer Schichtdicke, beispielsweise in der Größenordnung von 20 µm aufgebracht und wird später mit wenigstens einem weiteren Zwischen- und/oder Deckanstrich versehen. Stahlteile, die einen dünnen Anstrich aus erfindungsgemäßer Beschichtungsmasse bis zu einer Schichtdicke von etwa 25 bis 30 µm tragen, sind (über)schweißbar, ohne daß durch den Schutzanstrich bedingte Poren in den Schweißnähten auftreten. Weiterhin kann die Beschichtungsmasse auf festsitzendem Rost appliziert werden.

Andererseits läßt sich die erfindungsgemäße Beschichtungsmasse auch in einem einzigen Arbeitsgang in relativ hohen Schichtdicken von wenigstens 50 µm und mehr aufbringen und härtet trotzdem allein durch Zutritt von Feuchtigkeit aus der umgebenden Atmosphäre in kurzer Zeit aus. Ein einziger Auftrag der erfindungsgemäßen Beschichtungsmasse in einer Schichtstärke von wenigstens 75 µm kann die nach dem Stand der Technik erforderliche Applizierung von einmal Primer und anschließend Folgeanstrich zur Gewährleistung von gutem Rostschutz ersetzen. In relativ dicker Schichtstärke von wenigstens 50 µm aufgetragen, ergibt die erfindungsgemäße Beschichtungsmesse einen flexiblen, harten und gegen mechanische Beschädigungen hoch beständigen Schutzüberzug.

Die aus der erfindungsgemäßen Beschichtungsmasse erhaltenen Anstrichfilme erlauben auch nach langen Standzeiten eine einfache und gute Überarbeitung; beispielsweise gewährleistet einfaches Überstreichen ohne vorheriges Abschleifen und/oder Sandstrahlen auch nach Standzeiten von einem Jahr und mehr eine hervorragende Haftung des neuen Anstriches.

Ein aus der erfindungsgemäßen Beschichtungsmasse erhaltener Anstrichfilm kann als Grund für Folgeanstriche für anders zusammengesetzte Systeme dienen, beispielsweise für 1- oder 2-Komponenten-PUR-Systeme, für 2-Komponenten-Epoxid-Systeme und dgl., wobei eine gute Haftung des Folgeanstriches erhalten wird.

Weiterhin ist Gegenstand der Erfindung ein Verfahren zur Erzeugung eines Schutzüberzuges auf einem Stahl- oder Eisenuntergrund, wobei man die erfindungsgemäße 1-Komponenten-Beschichtungsmasse auf einem schutz-, staub-, öl- und fettfreien Untergrund aufbringt und unter Feuchtigkeitszutritt aus der umgebenden Atmosphäre aushärten läßt.

Bevorzugte Verwendungen der erfindungsgemäßen Beschichtungsmasse betreffen den Korrosionsschutz von Stahl- und Eisenflächen, insbesondere die Erzeugung von säurebeständigen Schutzüberzügen, die bis herab zu einem pH-Wert von etwa 2 beständig sind.

Weitere vorteilhafte Ausgestaltungen und Weiterbildungen der Erfindung ergeben sich aus den Unteransprüchen.

Nachstehend wird die Erfindung im einzelnen mit Bezugnahme auf bevorzugte Ausführungsformen erläutert.

Die erfindungsgemäße Beschichtungsmasse ist gekennzeichnet durch einen Gehalt an den nachfolgend aufgeführten, notwendigen Bestandteilen in den angegebenen Anteilen; hierbei beziehen sich die Angaben auf das Gesamtgewicht der Beschichtungsmasse:

| | |
|---|---|
| 20 bis 40 Gew.-% | Isocyanat-Präpolymer, |
| 10 bis 30 Gew.-% | Lacklösungsmittel, |
| 5 bis 10 Gew.-% | aliphatische Ester, |
| 5 bis 15 Gew.-% | Eisen(III)oxid, |
| 0,5 bis 2 Gew.-% | Anti-Absetzmittel, |
| 20 bis 30 Gew.-% | blättchenförmige Extender, und |
| 1 bis 4 Gew.-% | feuchtigkeitsbindendes Mittel. |

Zusätzlich kann die Beschichtungsmasse bis zu 3 Gew.-% übliche Lack-Zusätze enthalten. Vorzugsweise enthält die Beschichtungsmasse zusätzlich 1 bis 3 Gew.-% übliche Lack-Zusätze. Zu solchen Lack-Zusätzen gehören insbesondere - ohne darauf beschränkt zu sein - Weichmacher, Beschleuniger, Verlaufmittel, Entlüftungsmittel, Viskositätsstabilisatoren, Netzmittel, Dispergierhilfsmittel, Antiaufschwimmittel und dgl.

Als Isocyanat-Präpolymer bzw. Polyisocyanat kommen die bekannten Diisocyanate, Triisocyanate in den handelsüblichen Formen in Betracht. Gut geeignet ist beispielsweise die unter der Handelsbezeichnung "Desmodur" vertriebene Gruppe von Isocyanaten. Besonders gute Ergebnisse wurden mit Präpolymeren der Toluylendiisocyanate erzielt, wobei sowohl 2,4- wie 2,6-Toluylendiisocyanat oder das handelsübliche Isomerengemisch eingesetzt werden kann. Weiterhin kann als Polyisocyanat das Präpolymer von Diphenylmethan-4,4'-Diisocyanat oder Hexamethylen-1,6-Diisocyanat eingesetzt werden.

Vorzugsweise wird ein Polyisocyanat verwendet, das - bezogen auf das Isocyanatgewicht - 5 bis 9 % Isocyanatgruppen enthält.

Besonders bevorzugt wird ein Polyisocyanat auf der Basis von Toluylendiisocyanat verwendet, das - bezogen auf das Isocyanatgewicht - 5 bis 9 % Isocyanatgruppen enthält. Der Anteil an derartigem Toluylendiisocyanat-Präpolymer macht vorzugsweise 22 bis 28 % des Gesamtgewichtes der Beschichtungsmasse aus.

Als weiteren notwendigen Bestandteil enthält die erfindungsgemäße Beschichtungsmasse Lacklösungsmittel. Der Anteil an Lacklösungsmittel kann von 10 bis 30 Gew.-% reichen; vorzugsweise ist ein Lacklösungsmittel-Gehalt von 22 bis 28 Gew.-% vorgesehen.

Das Lacklösungsmittel soll einen Flammpunkt von 50 bis 60° C aufweisen. Im Hinblick auf einerseits gute Lösungseigenschaften und andererseits eine ausreichend schnelle Verdunstung soll das Lacklösungsmittel einen Siedebereich von etwa 150 bis 200° C aufweisen, und aus 25 bis 40 % aromatischen und zu 60 bis 75 % aliphatischen Verbindungen bestehen. Als aromatische Verbindungen kommen hauptsächlich Xylole in Betracht.

Als weiteren notwendigen Bestandteil enthält die erfindungsgemäße Beschichtungsmasse 5 bis 10 Gew.-% aliphatische Ester. Diese dienen hauptsätzlich zur besseren Anlösung des Isocyanats und sollen die Suspension mit den Eisen(III)oxid-Partikelchen stabilisieren. Hier kommen die Ester der $C_1$- und $C_3$-Carbonsäuren mit niederen ein- oder mehrwertigen aliphatischen Alkoholen in Betracht. Vorzugsweise werden aliphatische Ester mit zwei oder mehr Estergruppen pro Molekül eingesetzt, die ein Molekulargewicht im Bereich von 120 bis 180 aufweisen. In dieser Hinsicht wurden besonders gute Ergebnisse mit Glykolacetaten erhalten, welche daher vorzugsweise als aliphatische Ester verwendet werden.

Nach einem weiteren wesentlichen Gesichtspunkt der Erfindung enthält die feuchtigkeitshärtende 1-Komponenten-Beschichtungsmasse auf der Basis von Polyurethan bildendem Isocyanat 5 bis 15 Gew.-% Eisen(III)oxid. Das Eisen(III)oxid dient nicht nur als farbgebendes Pigment, sondern hat darüber hinaus eine korrosionshemmende Wirkung, insbesondere gegenüber sauren Einflüssen, wo das typischerweise verwendete Zinkpulver versagt.

Das im Rahmen der vorliegenden Erfindung verwendete Eisen(III)oxid soll wenigstens 95-%-ig reines $Fe_2O_3$ sein. Im Hinblick auf die gute Vermischbarkeit mit den restlichen organischen Bestandteilen und im Hinblick auf die Stabilität der erhaltenen Suspension soll besonders feinteiliges $Fe_2O_3$ eingesetzt werden. Vorzugsweise wird $Fe_2O_3$ mit einer mittleren Teilchengröße kleiner 20 μm, und besonders bevorzugt $Fe_2O_3$ mit einer mittleren Teilchengröße kleiner 15 μm verwendet. Neben der Teilchengröße hängt die Brauchbarkeit des in Betracht gezogenen $Fe_2O_3$ auch von dessen Oberfläche ab. In dieser Hinsicht kann zur Beurteilung der Brauchbarkeit die Ölzahl des $Fe_2O_3$ dienen. Hierbei handelt es sich um einen in der Fachwelt bekannten Parameter, der besagt, welche Menge Öl erforderlich ist, um 100 g $Fe_2O_3$ zu einer Paste zu verarbeiten (vgl. DIN 53 199). Im Rahmen der vorliegenden Erfindung haben sich $Fe_2O_3$-Präparate mit einer Ölzahl von 15 bis 25 g/100 g als besonders geeignet erwiesen, und werden deshalb bevorzugt eingesetzt.

Anti-Absetzmittel für Beschichtungsmassen der hier betrachteten Art sind in der Fachwelt bekannt; zu bekannten und im Rahmen der vorliegenden Erfindung brauchbaren Anti-Absetzmitteln gehören beispielsweise Montmorillonite, Kieselsäure, hydriertes Rizinusöl und dgl.

Blättchenförmige Extender bzw. Füllstoffe sind ebenfalls bekannt. Zu üblichen und im Rahmen der vorliegenden Erfindung brauchbaren blättchenförmigen Extendern gehören beispielsweise Talkum, Bariumsulfat, Schuppenpigmente, insbesondere Schuppenpigmente auf der Basis von Si/Al-Oxiden, und vergleichbare Füllstoffe. Die erfindungsgemäß vorgesehenen Extender sollen arm und vorzugsweise frei an Carbonat und/oder $CO_2$-abspaltenden Komponenten sein, um im Gemisch mit Polyisocyanat eine hohe Lagerstabiltität zu gewährleisten.

Als feuchtigkeitsbindende bzw. feuchtigkeitsentziehende Mittel kommen feinteilige, natürliche und synthetische Zeolithe (beispielsweise die von BAYER AG vertriebenen Zeolith-L-Paste), ferner Molekularsiebe aus Aluminiumoxid und Siliciumoxidverbindungen, gegebenenfalls mit einem Zusatz von Titan, in Betracht. Weiterhin können auf chemischem Wege wasserbindende Mittel vorgesehen werden, wie etwa Monoisocyanate. Derartige feuchtigkeitsbindende bzw. feuchtigkeitsentziehende Mittel sind handelsüblich zugänglich.

Um eine feuchtigkeitshärtende 1-Komponenten-Beschichtungsmasse hoher Lagerstabilität zu erhalten, sollen die einzelnen Bestandteile im wesentlichen frei von Komponenten mit aktiven Wasserstoffatomen sein; in erster Linie wäre hier an Wasser und OH-Gruppen zu denken. Die Komponenten des Lacklösungsmittels, die aliphstischen Ester und die gegebenenfslls vorhandenen Träger für die Lack-Zusätze sollen deshalb weitestgehend wasserfrei und frei von OH-Gruppen sein.

Die Herstellung der erfindungsgemäßen Beschichtungsmasse kann nach in der Lackindustrie üblichen Techniken erfolgen. Zumeist werden die Komponenten in den vorgegebenen Anteilen in einen Kessel gegeben und mittels eines Schnellrührers bzw. Dissolvers vermischt. Hierbei hat es sich gut bewährt, das Gemisch aus Polyisocyanat, Lacklösungsmittel und aliphatischem Ester vorzulegen, und daraufhin die restlichen Bestandteile nacheinander zuzugeben, wobei das feuchtigkeitsbindende Mittel zum Schluß zugegeben wird. Bewährt hat sich eine Rührdauer von etwa 10 bis 20 min bei Raumtemperatur. Schließlich erhält man eine selbstverlaufende, strukturviskose Masse, die in dieser Form einsatzbereit ist.

Bei Bedarf kann die Beschichtungsmasse gelagert werden, wobei die Lagerfähigkeit bei Raumtemperatur wenigstens 6 Monate beträgt. Einzelne Proben sind ohne erkennbare Viskositätszunahme und/oder Reaktivitätsabnahme bereits mehr als 12 Monate gelagert worden.

Weil die erfindungsgemäße Beschichtungsmasse ein 1-Komponenten-System darstellt, ist keine nennenswerte Topfzeit gegeben. Das Material soll nach dem Öffnen des Lagerbehälters zügig verarbeitet werden, weil ansonsten Hautbildung und langsame Durchreaktion durch Zutritt von Luftfeuchtigkeit auftreten würde.

Die Aufbringung der Beschichtungsmasse auf dem vorgesehenen Stahl- und Eisenuntergrund kann nach üblichen Verfahren erfolgen, beispielsweise mittels einer Rolle oder durch Aufspritzen; gut bewährt hat sich beispielsweise das mit hohem Druck arbeitende Airless-Spritzverfahren.

Die Beschichtungsmasse wird in einer Schichtdicke von wenigstens 20 µm auf dem vorgesehenen Untergrund aufgebracht; vorzugsweise ist eine Schichtdicke von etwa 50 bis 75 µm vorgesehen. Es ist weiterhin möglich, mehrere Schichten übereinander aufzubringen, nachdem die vorangegangene Schicht weitgehend durchgehärtet ist. Eine 45 µm dicke Schicht trocknet beispielsweise unter Umgebungsbedingungen nach etwa 30 min soweit, daß sie danach überarbeitbar ist, so daß eine oder weitere Schicht(en) aufgebracht werden kann (können). Nach ca. 18 h ist der Schutzüberzug völlig ausgehärtet und fest und kann der vorgesehenen Belastung ausgesetzt werden. Nach Bewitterung und/oder Alterung, auch über einen Zeitraum von 1 Jahr und länger hinweg, ist der aus der erfindungsgemäßen Beschichtungsmasse erhaltene Anstrichfilm ohne weiteres mit gleichem Material erneut beschichtbar. Auch ohne vorausgegangenes Abschleifen und/oder Sandstrahlen wird eine gute Haftung der Folgebeschichtung erhalten.

Die Vorbereitung des Stahl- und Eisenuntergrundes zur erstmaligen Aufbringung der erfindungsgemäßen Beschichtungsmasse erfordert keine besonderen Maßnahmen; es ist ausreichend, wenn der Untergrund schmutz-, staub-, öl- und fettfrei ist, was durch übliche Maßnahmen erreicht wird. Zur Erzielung optimaler Beschichtungen ist vorheriges Sandstrahlen zweckmäßig. Auch Applizierung auf festsitzendem Rost ist möglich. Besondere Anforderungen an die Trockenheit des Untergrundes bestehen nicht. Die erfindungsgemäße Beschichtungsmasse kann auch auf feuchter, jedoch noch nicht nasser Fläche aufgebracht werden, ohne daß dadurch das Aushärten und Abbinden sowie die Qualität des fertigen Schutzüberzuges beeinträchtigt werden. Wie bereits oben ausgeführt, kann die erfindungsgemäße Beschichtungsmasse nicht nur auf frischen Stahl- und Eisenflächen aufgebracht werden, sondern auch auf einem Grundanstrich, beispielsweise auf handelsüblichem Rotprimer auf der Basis von z. B. Epoxidharz-Ester-Systemen oder 2-Komponenten-Epoxid-Systemen.

Nach dem Auftragen der Beschichtungsmasse auf dem Untergrund härtet diese unter Zutritt der Feuchtigkeit aus der umgebenden Atmosphäre selbsttätig aus, ohne daß besondere Maßnahmen erforderlich wären.

## Patentansprüche

1. Feuchtigkeitshärtende 1-Komponenten-Beschichtungsmasse für Stahl und Eisen mit einem Gehalt an

| | |
|---|---|
| 20 bis 40 Gew.-% | Isocyanat-Präpolymer, |
| 10 bis 30 Gew.-% | Lacklösungsmittel mit einem Siedebereich von 150 bis 200°C, bestehend aus 25 bis 40 % aromatischen und 75 bis 60 % aliphatischen Verbindungen, |
| 5 bis 15 Gew.-% | Eisen(III)oxid, |
| 5 bis 10 Gew.-% | Ester von $C_1$- und $C_3$-Carbonsäuren mit ein- oder mehrwertigen aliphatischen Alkoholen, |
| 0,5 bis 2 Gew.-% | Anti-Absetzmittel, |
| 20 bis 30 Gew.-% | blättchenförmige Extender, |
| 1 bis 4 Gew.-% | feuchtigkeitsbindendes Mittel, und |
| 0 bis 3 Gew.-% | übliche Lack-Zusätze, |

bezogen auf das Gesamtgewicht der Beschichtungsmasse.

2. Feuchtigkeitshärtende 1-Komponenten-Beschichtungsmasse nach Anspruch 1, dadurch gekennzeichpet, daß der Carbonsäureester ein aliphatischer Ester mit zwei oder mehr Estergruppen pro Molekül und einem Molekulargewicht im Bereich von 120 bis 180 ist.

3. Feuchtigkeitshärtende 1-Komponenten-Beschichtungsmasse nach Anspruch 2, dadurch gekennzeichnet, daß der Carbonsäureester ein Glykolacetat ist.

4. Feuchtigkeitshärtende 1-Komponenten-Beschichtungsmasse nach einem der vorhergehenden Ansprüche, dadurch gekennzeichnet, daß das Lacklösungsmittel zu 25 bis 40 % aus aromatischen Komponenten und zu 75 bis 60 % aus aliphatischen Verbindungen besteht, einen Siedebereich von 150 bis 200°C und einen Flammpunkt von 50 bis 60°C hat.

5. 1-Komponenten-Beschichtungsmasse nach einem der vorhergehenden Ansprüche, dadurch gekennzeichnet, daß das Isocyanat-Präpolymer ein Polyisocyanat auf der Basis von Toluylendiisocyanat mit 5 bis 9 % Isocyanatgruppen ist.

6. 1-Komponenten-Beschichtungsmasse nach einem der Ansprüche 1 bis 3, dadurch gekennzeichnet, daß das Eisen(III)oxid eine mittlere Teilchengröße kleiner 20 μm, vorzugsweise kleiner 15 μm aufweist.

7. 1-Komponenten-Beschichtungsmasse nach einem der Ansprüche 1 bis 6, dadurch gekennzeichnet, daß das Eisen(III)oxid eine Ölzahl - bestimmt nach DIN 53 199 - von 15 bis 25 g/100 g $Fe_2O_3$ aufweist.

8. Verfahren zur Erzeugung eines Schutzüberzuges auf einem Stahl- oder Eisenuntergrund, dadurch gekennzeichnet, daß man eine 1-Komponenten-Beschichtungsmasse nach einem der Ansprüche 1 bis 7 auf einem schmutz-, staub-, öl- und fettfreien Untergrund aufbringt und unter Feuchtigkeitszutritt aus der umgebenden Atmosphäre aushärten läßt.

9. Verfahren nach Anspruch 8, dadurch gekennzeichnet, daß man - zur Verwendung als Primer - die Beschichtungsmasse in einer Schichtdicke von wenigstens 20 bis 30 μm aufbringt.

10. Verfahren nach Anspruch 8, dadurch gekennzeichnet, daß man - als Folgebeschichtung auf geprimerten Stahl- und Eisenflächen - die Beschichtungsmasse in einer Schichtdicke von wenigstens 50 μm aufbringt.

11. Verwendung einer feuchtigkeitshärtenden 1-Komponenten-Beschichtungsmasse nach einem der Ansprüche 1 bis 7 zum Korrosionsschutz von Stahl- und Eisenflächen.

12. Verwendung einer feuchtigkeitshärtenden 1-Komponenten-Beschichtungsmasse nach einem der Ansprüche 1 bis 7 zur Erzeugung von gut haftenden, flexiblen, harten, mechanisch widerstandsfähigen und säurebeständigen Schutzüberzügen auf Stahl- und Eisenflächen.

## Claims

1. Moisture-hardening single-constituent coating mass for steel and iron, with

| | |
|---|---|
| 20-40 % | by weight of isocyanate prepolyme |
| 10-30 % | by weight of lacquer solvent with a boiling point range of 150 - 200°C, consisting of 25 - 40 % aromatic and 75 - 60 % aliphatic compounds, |
| 5-15 % | by weight of iron (III) oxide, |
| 5-10 % | by weight of ester of $C_1$ - and $C_3$ - carbonic acids with mono- or multivalent aliphatic alcohols, |
| 0.5-2 % | by weight of anti-settling agent, |
| 20-50 % | by weight of lamelliform extender |
| 1-4 % | by weight of moisture-binding agent and |
| 0-3 % | by weight of customary lacquer additives, |

based on the total weight of the coating mass.

2. Moisture hardening single component coating mass in accordance with Claim 1, characterized by the fact that the carbonic acid ester is an aliphatic ester with two or more ester groups per molecule and with a molecular weight in the range 120 - 180.

3. Moisture hardening single component coating mass in accordance with Claim 2, characterized by the fact that the carbonic acid ester is a glycol acetate.

4. Moisture hardening single component coating mass in accordance with one of the foregoing claims, characterized by the fact that the lacquer of 25 - 40 % of aromatic compounds and to the extent of 75- 60 % of aliphatic compounds has a boiling point range of 150 - 200°C and a flash point of 50 - 60°C.

5. Moisture hardening single component coating mass in accordance with one of the foregoing claims, characterized by the fact that the isocyanate prepolymer is a polyiso-cyanate with a toluylene di-isocyanate base with 5 - 9 % of isocyanate groups.

6. Moisture hardening single component coating mass in accordance with one of Claims 1-3, characterized by the fact that the iron (III) oxide has an average particle size of less than 20 µm and preferably less than 15 µm.

7. Moisture hardening single component coating mass in accordance with one of Claims 1 - 6, characterized by the fact that the iron (III) oxide has an oil adsorption, determined according to DIN 53199 of 15 - 20 g/100g $Fe_2O_3$.

8. Process for obtaining a protective coating on a steel or iron background, characterized by the fact that a single constituent coating mass according to one of Claims 1 - 7 is applied to a background free of dirt, dust, oil and grease and allowed to harden during the access of moisture from the surrounding atmosphere.

9. Process in accordance with Claim 8, characterized by the fact that the coating mass - for the use as a primer - is applied as a layer at least 20 - 30 µm in thickness.

10. Process in accordance with Claim 8, characterized by the fact that the coating mass - as a subsequent coating on steel and iron surfaces treated with a primer, is applied as a layer at least 50 µm in thickness.

11. Use of a moisture-hardening single-constituent coating mass in accordance with one of Claim 1 - 7 for the protection of steel and iron surfaces against corrosion.

12. Use of a moisture-hardening single-constituent coating mass in accordance with one of Claim 1 - 7 for the production of firmly adhering, flexible, hard mechanically strong and acid-resisting protective coatings on steel and iron surfaces.

## Revendications

1. Masse de revêtement à un composant, durcissant à l'humidité, pour fer et acier, contenant:

20 à 40 % en poids d'un prépolymère d'isocyanate,

10 à 30 % en poids d'un solvant pour vernis, ayant un intervalle d'ébullition de 150 à 200°C, constitué de 25 à 40 % de composés aromatiques et de 75 à 60 % de composés aliphatiques,

5 à 15 % en poids d'oxyde de fer(III),

5 à 10 % en poids d'un ester d'acides carboxyliques en $C_1$ à $C_3$ de mono- ou polyalcools aliphatiques,

0,5 à 2 % en poids d'une gent de supension,

20 à 30 % en poids d'une charge lamellaire,

1 à 4 % en poids d'un agent liant de l'humidité, et

0 à 3 % en poids d'additifs habituels pour vernis,

par rapport au poids total de la masse de revêtement.

2. Masse de revêtement à un composant durcissant à l'humidité selon la revendication 1, caractérisé en ce que l'ester d'acide carboxylique est un ester aliphatiqe comportant au moins deux groupes ester par molécule et ayant une masse moléculaire comprise entre 120 et 180.

3. Masse de revêtement à un composant durcissant à l'humidité selon la revendication 2, caractérisé en ce que l'ester d'acide carboxylique est un acétate de glycol.

4. Masse de revêtement à un composant durcissant à l'humidité selon l'une des revendicaitons précédentes, caractérisé en ce que le solvant pour vernis est constitué de 25 à 40 % de composants aromatiques et de 75 à 60 % de composés aliphatiques, et qu'il a un intervalle d'ébullition de 150 à 200°C et un point d'éclair de 50 à 60°C.

5. Masse de revêtement à un composant selon l'une des revendications précédentes, caractérisée en ce que le prépolymère d'isocyanate est un polyisocyanate à base de diisocyanate de toluylène comportant de 5 à 9 % de groupes isocyanate.

6. Masse de revêtement à un composant selon l'une des revendications 1 à 3, caractérisée en ce que l'oxyde de fer (III) présente une granulométrie moyenne inférieure à 20 µm, de préférence inférieure à 15 µm.

7. Masse de revêtement à un composant selon l'une des revendications 1 à 3, caractérisée en ce que l'oxyde de fer (III) présente un indice d'huile, déterminé selon DIN 53199, de 15 à 25 g/100 g $Fe_2O_3$.

8. Procédé pour la préparation d'un revêtement protecteur sur un subjectile en acier ou en fer, caractérisé en ce qu'on applique une masse de revêtement à un composant selon l'une des revendications 1 à 7 sur un subjectile exempt de salissures, de poussières, d'huiles et de graisses, et qu'on le laisse durcir sous l'effet de l'humidité provenant de l'atmosphère ambiante.

9. Procédé selon la revendication 8, caractérisé en ce que, pour servir d'apprêt, on applique la masse de revêtement selon une épaisseur de couche d'au moins 20 à 30 µm.

10. Procédé selon la revendication 8, caractérisé en ce qu'on applique la masse de revêtement, servant de revêtement ultérieur, sur des surfaces en acier ou en fer apprêtées, selon une épaisseur de couche d'au moins 50 µm.

11. Utilisation d'une masse de revêtement à un composant, durcissant à l'humidité, selon l'une des revendications 1 à 7, pour protéger des surfaces d'acier et de fer contre la corrosion.

12. Utilisation d'une masse de revêtement à un composant, durcissant à l'humidité, selon l'une des revendications 1 à 7, pour réaliser, sur des surfaces de fer et d'acier, des revêtements protecteurs bien adhérents, souples, durs, présentant une résistance mécanique et résistant aux acides.